# EUROPEAN PATENT APPLICATION

(11) **EP 1 813 575 A1**
(43) Date of publication of application: **01.08.2007**
(21) Application number: 05788179.9
(22) Date of filing: 29.09.2005
(51) Int. Cl.: C01B 33/40, C01B 33/44, B01J 35/02, C09D 1/00, C09D 5/00

(54) **CLAY COMPOSITE MATERIAL**

(30) Priority: 29.09.2004 JP 2004284994; 14.03.2005 JP 2005071598
(71) Applicant: KANSAI PAINT CO., LTD., Amagasaki-shi, Hyogo 661-0964 (JP)
(72) Inventor: HIROSE, Yuji, c/o Kansai Paint Co., Ltd., Hiratsuka-shi, Kanagawa 254-0016 (JP); TSUSHIMA, Shinji, c/o Kansai Paint Co., Ltd., Hiratsuka-shi, Kanagawa 254-0016 (JP)
(74) Representative: Stuart, Ian Alexander
(86) International application number: PCT/JP2005/017948
(87) International publication number: WO 2006/035872

(57) **Abstract**

The present invention relates to a clay composite obtained by chemically combining a peroxo ligand-containing water-soluble metal complex (A) and a water-swelling clay mineral (B) by heat treating, and a clay composite composition prepared by dispersing the clay composite into water and/or organic solvent.

## Description

### Field of the Invention:

The present invention relates to a composite of a metal complex with a clay mineral, and the composite is capable of easily forming an inorganic coating film and is useful as a barrier film, a catalyst material due to the application of photo-catalyst activity, and adsorbent, etc.

### Background Art:

The prior art discloses a titanium oxide fine particle-clay composite obtained by chemically incorporating a titanium oxide fine particle into an interlaminar gap of a clay mineral having a laminar structure (see, for example, non-patent references 1-4, patent references 1 and 2, etc.). The titanium oxide fine particle-clay composite obtained by the above method is porous due to gaps in the clay mineral. The above porous structure is applicable to catalyst, adsorbent, etc.

Of the clay minerals, a water-swelling clay mineral is easily dispersed into water, resulting in making a mechanical dispersion step unnecessary to be advantageous in the preparation of a water based-coating solution. Further, the water-swelling clay mineral itself has a good film-forming properties, and is suitable as a film-forming material.
However, the titanium oxide fine particle-clay composite obtained by the methods disclosed in the above references require a crystallization step for the purpose of improving photocatalyst activity to be obtained usually in the form of powder, so that preparation of a uniformly dispersed coating solution for the purpose of uniformly coating onto a substrate. However, poor dispersibility of the titanium oxide fine particle-clay composite into water or organic solvent makes it difficult to prepare a coating solution showing good long-term storage properties. Addition of an organic resin or a surface active agent may improve dispersibility of the titanium oxide-clay composite, and the stability and film-forming properties of the coating solution. However, deterioration of the coating film may easily take place due to a photocatalyst function of the titanium oxide fine particle to result poor long-term durability. Further, high temperature heat-curing treatment in the crystallization step of the titanium oxide may limit kinds of the substrate. For example, in the case of the general-purpose plastics, a heat-curing treatment at 300°C or higher is substantially difficult.
Non-patent reference 1: Mater. Chem. Phys., 17, 87-101 (1987).
Non-patent reference 2: J. Phys. Chem., 93, 4833-4837 (1989).
Non-patent reference 3: Chem. Mater., 14, 5037-5044 (2002).
Non-patent reference 4: Chem. Commun., 2687-2679 (2002).
Patent reference 1: Japanese Patent Application Laid-Open No. 2001-97717.
Patent reference 2: Japanese Patent Application Laid-Open No. 1998-245226.

### Disclosure of the Invention:

### Problems to be Solved:

An object of the present invention is to provide a clay composite capable of being easily dispersed into water or an organic solvent, and forming an inorganic coating film showing good durability.

### Means to Solve the Problems:

The present inventors made intensive studies for the purpose of solving the above problems to find out that a clay composite obtained by chemically incorporating a water-soluble metal complex containing a peroxo-ligand into a water-swelling clay mineral can form an inorganic coating film showing good durability without a high-temperature heat-curing treatment, resulting in accomplishing the present invention.
Thus, the present invention relates to a clay composite obtained by chemically combining the peroxo-ligand-containing water-soluble metal complex (A) with the water-swelling clay mineral (B).

The present invention also relates to a clay composite composition prepared by dispersing the clay composite into water and/or organic solvent.
Further, the present invention relates to an inorganic coating film-forming method by use of the clay composite composition, and to a resulting inorganic film.

### Effect of the Invention:

The clay composite of the present invention is obtained by chemically incorporating the water-soluble metal complex containing the peroxo-ligand into the water-swelling clay mineral, is stable in water and/or organic solvent, is capable of forming an inorganic coating film showing good durability without a high temperature heat-curing treatment, and is very useful as a barrier coating film, photocatalyst material, adsorbent, etc.

### Preferable Embodiments of the Invention:

The clay composite of the present invention is obtained by chemically combining the peroxo-ligand-containing water-soluble metal complex (A) with the water-swelling clay mineral (B).

### (A) Water-Soluble Metal Complex Containing Peroxo-Ligand:

The metal complex as component (A) in the clay composite may include any peroxo-ligand-containing water-soluble metal complex as known in the art, preferably may include at least one metal complex selected from the group consisting of peroxo-titanium complex, peroxo-molybdenum complex, peroxo-tungsten complex, peroxo-zirconium complex, peroxo-niobium complex, peroxo-vanadium complex, peroxo-tantalum complex, and peroxo-manganese complex, peroxo-titanium complex being particularly preferable when used as a photocatalyst.

The peroxo-ligand-containing water-soluble metal complex (A) may also contain a ligand other than the peroxo-ligand.
The peroxo-ligand-containing water-soluble metal complex (A) may be prepared by the method known in the art, for example, by reacting a metal or metal compound with hydrogen peroxide, more specifically, a peroxo-titanium complex may be obtained by reacting a titanium compound selected from, for example, a metal titanium, hydrolyzable titanium, hydrolyzable titanium low condensate, titanium hydroxide, titanium hydroxide low condensate, and metatitanic acid with a hydrogen peroxide water.

The hydrolyzable titanium is a titanium compound having a hydrolyzable group bonded directly to titanium, so as to form titanium hydroxide by reaction with moisture such as water and water vapor. In the hydrolyzable titanium, all of the groups bonded directly to titanium may be the hydrolyzable group, or a part of the groups may be hydrolyzable hydroxyl group. The hydrolyzable group may include ones capable of forming titanium hydroxide by reaction with moisture as above mentioned without particular limitations, specifically may include, for example, lower alkoxyl group, a group forming a salt with titanium, for example, halogen atom such as chlorine, hydrogen atom, sulfate ion, etc.

The hydrolyzable titanium containing lower alkoxyl groups as the hydrolyzable group may preferably include tetra-alkoxytitanium represented by the general formula: Ti(OR)₄, wherein R is same or different, and represents alkyl group having 1 to 5 carbon atoms. C₁₋₅ alkyl group may include, for example, methyl group, ethyl group, n-propyl group, iso-propyl group, n-butyl group, iso-butyl group, sec-butyl group, tert-butyl group, and the like.

The hydrolyzable titanium containing the salt-forming group with titanium as the hydrolyzable group may typically include titanium chloride, titanium sulfate, etc. The hydrolyzable titanium condensate may include low condensates between the hydrolyzable titanium. The degree of condensation in the hydrolyzable titanium low condensate or the titanium hydroxide low condensate is preferably in the range of 2 to 30, particularly 2 to 10.

The water-soluble metal complex (A) may be in a state of powder or liquid. Particularly, a solution state may preferably make easy the chemical combination with the component (B).
The peroxo-titanium complex solution may include, for example, ones obtained by the following methods:
(1) A titanyl ion-hydrogen peroxide complex aqueous solution or titanium acid (peroxo-titanium hydrate) aqueous solution obtained by adding hydrogen peroxide water to a gel or sol of hydrous titanium hydroxide (see Japanese Patent Application Laid-Open Nos. 1988-35419 and 1989-224220).

(2) A titania film-forming liquid obtained by reacting a titanium hydroxide gel prepared from an aqueous solution of titanium chloride or titanium sulfate and a basic solution with hydrogen peroxide solution to be synthesized (see Japanese Patent Application Laid-Open Nos. 1997-71418 and 1998-67516).
Further, in the titania film-forming liquid, an aqueous solution of titanium chloride or titanium sulfate having a salt-forming group with titanium is reacted with an alkaline solution of ammonia, caustic soda, etc. to precipitate a titanium hydroxide gel called as orthotitanic acid, followed by separating the titanium hydroxide gel by decantation with water, sufficiently washing with water, adding hydrogen peroxide water, and decomposing and removing the remaining hydrogen peroxide to obtain a yellow transparent viscous liquid.

The precipitated orthotitanic acid may be in a polymer molecule gel state due to polymerization or hydrogen bond between hydroxyl groups, and can not be used as it is as an aqueous solution containing titanium. Addition of hydrogen peroxide water to the gel results in that the hydroxyl groups partly become a peroxide state to be dissolved as peroxo-titanic acid ion, or that fission of polymer to a low-molecular compound may take place to become a sol state, that remaining hydrogen peroxide is decomposed to water and oxygen to be used as an inorganic film-forming titanium-containing aqueous solution.

The sol contains only titanium atom, oxygen atom and hydrogen atom and generates only water and oxygen when dried or calcined to form titanium oxide, resulting in making removal of any organic component unnecessary, and in making it possible to obtain a relatively high density crystalline titanium oxide at a temperature lower than that in the art.
(3) Addition of hydrogen peroxide to an aqueous solution of an inorganic compound such as titanium chloride and titanium sulfate forms a peroxo-titanium hydrate, followed by adding a basic substance to form a solution, leaving to stand or heating the solution to form a precipitate of a peroxo-titanium hydrate polymer, removing dissolved components other than water resulting from at least the titanium-containing starting material solution, and adding hydrogen peroxide to obtain a titanium oxide-forming solution (see Japanese Patent Application Laid-Open Nos. 2000-247638 and 2000-247639).

The peroxo-titanium complex solution may preferably one prepared by adding a titanium compound into hydrogen peroxide water. The titanium compound may include a hydrolyzable titanium compound containing such a group as to be converted to hydroxyl group by hydrolysis as represented by the general formula: Ti(OR)₄, wherein R is, same or different, alkyl group having 1 to 5 carbons, and a low condensate of the hydrolyzable titanium compound.

A mixing ratio of the hydrolyzable titanium compound and/or the low condensate thereof (hereinafter simply hydrolyzable titanium compound (a)) to hydrogen peroxide water is such that the hydrogen peroxide water is in the range of 0.1 to 100 parts by weight, particularly 1 to 20 parts by weight as hydrogen peroxide per 10 parts by weight of the hydrolyzable titanium compound (a). A hydrogen peroxide amount less than 0.1 part by weight makes formation a chelate unsatisfactory and forms a cloudy precipitate. On the other hand, when more than 100 parts by weight, unreacted remaining hydrogen peroxide may result discharge of dangerous active oxygen.

A hydrogen peroxide concentration of the hydrogen peroxide water is not particularly limited, but preferably in the range of 3 to 30% by weight from the standpoints of easiness of handling and a solid content of a resulting solution relating to coating workability.
The peroxo-titanium complex solution prepared by use of the hydrolyzable titanium compound (a) is prepared by reacting the hydrolyzable titanium compound (a) with hydrogen peroxide water at a temperature in the range of 1 to 70°C for 10 minutes to 20 hours.

The peroxo-titanium complex solution prepared by use of the hydrolyzable titanium compound (a) is such that the reaction of the hydrolyzable titanium compound (a) with hydrogen peroxide water results hydrolysis of the hydrolyzable titanium compound with water to form a hydroxyl group-containing titanium compound, followed by that the hydrogen peroxide may be coordinated with the hydroxyl group-containing titanium compound, and is such that the hydrolysis reaction and coordination with hydrogen peroxide may take place almost simultaneously to form a chelate solution having long-term storage stability with high stability in the range of room temperatures.

### Water-Swelling Clay Mineral (B)

The water-swelling clay mineral as the component (B) of the clay composite is a clay mineral which swells with water, and may include, for example, the smectite clay mineral such as montmorillonite, hectorite, saponite, etc., vermiculite, synthetic mica, etc. Of these, the smectite clay mineral is preferable. A mixing amount of the water-swelling clay mineral (B) is in the range of 0.1 to 5 parts by weight, particularly 0.2 to 1 part by weight per 1 (one) part by weight as solid content of the peroxo ligand-containing metal complex (A). A mixing amount less than the above range may reduce uniformness of the resulting coating solution, and coating washability. On the other hand, when more than the above range, adhesion properties of the coating film and photocatalyst activity may be reduced.

### Preparation of Clay Composite

The clay composite of the present invention is prepared by chemically combining the peroxo ligand-containing water-soluble metal complex (A) and the water-swelling clay mineral (B), and the chemical combination may be carried out, for example, by mixing the water-swelling clay mineral (B), the peroxo ligand-containing water-soluble metal complex (A), and optionally water and/or organic solvent, followed by heat treating. The above treatment may preferably be carried out under such conditions that the peroxo group remains in the clay composite from the standpoints of stability of dispersion of the clay composite and formation of the inorganic film at a lower temperature, and that a content of the peroxo group in the clay composite obtained by heat treatment is preferably in the range of 1 to 15 mmol, particularly 3 to 10 mmol per 1 (one) g of the clay composite solid content. A peroxo group amount outside the above range may reduce properties of the coating solution, such as stability, film-forming properties, substrate adhesion properties, coating workability, and the like.

The peroxo group amount in the clay composite is determined as follows. A sample solution (w[g]) is weighed and introduced into a 100 ml beaker, followed by adding 10 ml of 15% aqueous potassium iodide solution and 10 ml of 0.1N aqueous sulfuric acid solution, stirring several hours, adding 1 ml of saturated aqueous starch solution, titrating with 0.1N aqueous sodium thiosulfate solution as a titrant, and measuring a titer (X[ml]) as an end point, with a color change from brown to colorless, and obtaining a peroxo group amount in the sample as 0.05 × X ÷ w.

A peroxo group content in the clay composite may vary depending on the heat treating conditions. For example, a heat treatment at a temperature of 100°C or higher may result decomposition of almost all or all of the peroxo metal complex component in the peroxo ligand-containing water-soluble metal complex (A), resulting in that a precursor may be converted to rough particles, and resulting in making the resulting clay composite dispersion non-uniform, or reducing film-forming properties and coating workability.

Accordingly, a heating temperature in the heat treatment is preferably in the range of 50°C or higher, but lower than 100°C, particularly in the range of 80 to 98°C. A heating temperature lower than the above range may result an unsatisfactory chemical combination of the peroxo ligand-containing water-soluble metal complex (A) and the water-swelling clay mineral (B), resulting in making the resulting clay composite dispersion non-uniform, and reducing coating properties. A heat treating time is preferably in the range of 1 to 12 hours, particularly 3 to 8 hours. Too short heating time may result unsatisfactory chemical combination of the peroxo ligand-containing water-soluble metal complex (A) and the water-swelling clay mineral (B). On the other hand, too long heating time may result unsatisfactory water solubility. Both too short heating time and too long heating time may result a non-uniform clay composite dispersion; reduced substrate adhesion properties, and reduced coating workability.

The clay composite dispersion obtained by the above method may be used, as it is, as an inorganic film-forming clay composite composition, but optionally may further contain an inorganic fine particle. The inorganic fine particle may include, for example, silica, zeolite, alumina, zinc oxide, titanium oxide, and the like. A mixing amount is not particularly limited unless the smoothness and water resistance of the coating film may be reduced. A titanium oxide having photocatalyst activity may be selected as the titanium oxide.

The clay composite composition of the present invention may be coated onto or impregnated with various kinds of substrates, followed by drying to obtain an inorganic film containing a metal oxide fine particle-clay composite. The inorganic film has durability and may be applicable to various kinds of uses such as barrier film, and the like. The use of peroxo-titanium complex as the peroxo ligand-containing water-soluble metal complex (A) makes it possible to form a material having photocatalyst activity, resulting in being applicable to environmental cleaning and removal of pollutants.
A coating method of the clay composite composition for forming the inorganic coating film is not particularly limited, and may arbitrarily be selected from, for example, spray coating method, roller coating method, brushing coating method, bar-coater coating method, spin coating method, etc. A film thickness is preferably in the range of 0.1 - 3 µm, particularly 0.3 - 1 µm. A film thickness less than 0.1 µm may reduce durability of the coating film, and may make it difficult to maintain a long-term photocatalyst activity. On the other hand, a film thickness more than 3 µm may reduce substrate adhesion properties and coating surface smoothness, and may develop cracks in the coating film. A drying temperature of the coating film is preferably in the range of 20 to 200°C, more preferably 50 - 140°C from the standpoint of finish properties of the coating film.

### Example

The present invention is more specifically explained by the following Examples and Comparative Examples, in which "part" and "%" are represented by weight respectively.

### Preparation of Clay Composite Composition

### Example 1

A 300 ml flask was charged with 17.0 g of 30% hydrogen peroxide water and 127.7 g deionized water, followed by slowly dropping 5.3 g of titanium tetraisopropoxide into the flask keeping at 0 to 4°C with strong agitation, keeping at that temperature for 3 hours with strong agitation after the completion of dropping, and obtaining an aqueous solution containing orange to red colored peroxo-titanium complex in an amount of 1% by weight as TiO₂.

Next, 1.5 g of Lucentite SWN (trade name, marketed by CO-OP CHEMICAL CO., LTD., Smectite clay mineral) was slowly added into the flask containing the above aqueous solution, and was strongly stirred. After the completion of the addition, the temperature of the solution was slowly increased and the viscosity of the solution in the flask was also increased. The temperature of the solution was kept at 95°C for 4 hours to obtain a translucent light yellow liquid, followed by vacuuming the flask for desolvation and removing a volatile organic component to obtain a clay composite composition having a peroxo group content of 4.2 mmol per 1 (one) g of the solid content of the composition.

### Example 2

Example 1 was duplicated except that Laporite RD (trade name, marketed by Lockwood Limited, Smectite clay mineral) was used in place of Lucent SWN (trade name as above) to obtain a clay composite composition having a peroxo group content of 5.6 mmol per 1 (one) g of the solid content of the composition.

### Example 3

Example 1 was duplicated except that 1.5 g of Lucentite SWN (trade name as above) and 0.6 g of a fine zinc oxide (marketed by Sakai Chemical Industry, Co., Ltd.) was used in place of 1.5 g of Lucentite SWN (trade name as above) to obtain a clay composite composition having a peroxo group content of 2.1 mmol per 1 (one) g of the solid content of the composition.

### Example 4

A 300 ml flask was charged with 17.0 g of 30% hydrogen peroxide water and 127.1 g of deionized water, followed by slowly dropping 5.9 g of niobium pentaethoxide into the flask keeping at 0 to 4°C with strong agitation, keeping at that temperature for 3 hours with strong agitation after the completion of dropping, and obtaining an aqueous solution containing light yellow peroxo-niobium complex in an amount of 1.5% by weight as Nb₂O₅.

Next, 97.0 g of deionized water and 2.5 g of Lucentite SWN (trade name, marketed by CO-OP CHEMICAL CO., LTD., Smectite clay mineral) were slowly added into the flask containing the above aqueous solution, and was strongly stirred. After the completion of the addition, the temperature of the solution was slowly increased and the viscosity of the solution in the flask was also increased. The temperature of the solution was kept at 95°C for 4 hours to obtain a translucent light yellow liquid, followed by vacuuming the flask for desolvation and removing a volatile organic component to obtain a clay composite composition having a peroxo group content of 8.1 mmol per 1 (one) g of the solid content of the composition.

### Example 5

A 300 ml flask was charged with 7.4 g of 30% hydrogen peroxide water and 141.4 g of deionized water, followed by slowly dropping 1.2 g of tungsten powder into the flask keeping at 5 to 10°C with strong agitation, keeping at that temperature for 8 hours with strong agitation after the completion of dropping, and obtaining an aqueous solution containing colorless and transparent peroxo-tungsten complex in an amount of 1% by weight as WO₃.

Next, 1.5 g of Lucentite SWN (trade name, marketed by CO-OP CHEMICAL CO., LTD., Smectite clay mineral) were slowly added into the flask containing the above aqueous solution, and was strongly stirred. After the completion of the addition, the temperature of the solution was slowly increased and the viscosity of the solution in the flask was also increased. The temperature of the solution was kept at 95°C tor 4 hours to obtain a translucent clay composite composition having a peroxo group content of 10.5 mmol per 1 (one) g of the solid content of the composition.

### Example 6

Example 1 was duplicated except that 1.5 g of Lucentite SWN (trade name as above) and 0.6. g of Titanium P-25 (trade name, marketed by Degussa Corporation, photocatalyst-used titanium oxide) were used in place of 1.5 g of Lucentite SWN (trade name as above) to obtain a clay composite composition having a peroxo group content of 2.5 mmol per 1 (one) g of the composition.

### Comparative Example 1

Example 1 was duplicated except that the aqueous solution containing peroxo-titanium complex in an amount of 1% by weight as TiO₂ as obtained in Example 1 was used as an inorganic coating film-forming coating solution, having a peroxo group content of 20 mmol per 1 (one) g of the solid content of the solution.

### Comparative Example 2

Example 4 was duplicated except that the aqueous solution containing the peroxo niobium complex in an amount of 1.5% by weight as Nb₂0₅ as obtained in Example 4 was used as an inorganic coating film-forming coating solution, having a peroxo group content of 25 mmol per 1 (one) g of the solid content of the solution.

### Comparative Example 3

Example 5 was duplicated except that the aqueous solution containing the peroxo-tungston complex in an amount of 1% by weight as WO₃ as obtained in Example 5 was used as an inorganic coating film-forming coating solution having a peroxo group content of 32 mmol per 1 (one) g of the solid content of the solution.

### Comparative Example 4

A 300 ml flask was charged with 29 g of ethanol, followed by slowly dropping into the flask 7.8 g of titanium isopropoxide with strong agitation keeping the temperature of the solution at 0 to 4°C, and slowly adding 1.2 g of 2N-chloric acid and 113g of ethanol with strong agitation to obtain an inorganic coating film-forming coating solution.

### Comparative Example 5

To 150 g of deionized water was added 1.5 g of Lucentite SWN to obtain an inorganic coating film-forming coating solution having a solid content of 1%.

### Formation of Clay Composite Coating Film and Evaluation Thereof

Respective clay composite compositions obtained in Examples 1-6 and respective inorganic coating film-forming coating solution obtained in Comparative Examples 1-5 were coated onto a 5 cm × 15 cm cut glass plate and non-treated aluminum alloy plate (A1050P) by use of a bar coater (#5), followed by drying at 80°C for 10 minutes to obtain respective glass plates and aluminum alloy plates having an inorganic coating film respectively. Respective inorganic coating film-having aluminum alloy plates were subjected to film-forming properties and water resistance. Respective inorganic coating film-having glass plates obtained in Examples 1-3 and 6, and Comparative Examples 1 and 4 were subjected to photocatalyst activity evaluation by measuring a residual acetic acid concentration (ppm) after irradiation. Evaluation tests were carried out as follows. Results are shown in the following Table 1.

Film-Forming Properties:
Appearance of respective inorganic coating films prepared as above was visually evaluated as follows.
   ○: No cracks observed, in the coating film. Film continuously formed.
   ×: Cracks and peeling wholly observed without film-forming. Water Resistance:
Respective inorganic coating film-having aluminum alloy plates obtained as above were dipped into boiling water for 30 minutes, followed by removing, cooling down to room temperature, and visually evaluating film appearance as follows. On the other hand, 100 of a 1 mm × 1 mm square were formed by the crosscut-tape test method in accordance with JIS K-5400 8.5.2 (1990), followed by adhering a tape onto the surface, and peeling to evaluate a degree of peeling off squares on peeling as degree of peeling. The greater the degree of peeling, the lower the water resistance.

○: Conditions of the coating film prior to dipping into the boiling water are maintained.
×: Cracks and peeling of the coating film are observed. Residual Acetic Acid Concentration:
A part of the coating film on the inorganic coating film-having glass plate obtained in Examples 1-3 and 6, and Comparative Examples 1 and 4 was cut off with a cutter knife, followed by sufficiently pulverizing the cut-off coating film in a mortar to obtain a powder. Separately, a silica reactor was charged with 100 parts of an aqueous acetic acid solution having a concentration of 20 ppm, followed by adding 0.05 part of the above powder into the above solution, irradiating into the solution by use of a 100W high pressure mercury lump, cutting a light having a wave length of 300 nm or less through a UV cut-off Pyrex filter, and determining a residual acetic acid concentration in the solution 2 hours after starting irradiation by a liquid chromatography. The lower the residual acetic acid concentration (ppm) after irradiation, the higher the photocatalyst activity.

### Table 1

**Table 1**

| | Film-forming properties | Water Resistance | | Residual acetic acid concentration [ppm] |
|---|---|---|---|---|
| | | Visual evaluation | Degree of peeling | |
| Example 1 | ○ | ○ | 2% | 4.6 |
| Example 2 | ○ | ○ | 4% | 6.0 |
| Example 3 | ○ | ○ | 10% | 6.2 |
| Example 4 | ○ | ○ | 5% | - |
| Example 5 | ○ | ○ | 3% | - |
| Example 6 | ○ | ○ | 8% | 3.8 |
| Comparative Example 1 | × | × | 99% | 16.0 |
| Comparative Example 2 | ○ | × | 70% | - |
| Comparative Example 3 | ○ | × | 85% | - |
| Comparative Example 4 | × | × | 30% | 16.5 |
| Comparative Example 5 | ○ | × | 81% | - |

### Industrial Applicability

The present invention is applicable to a barrier film, photocatalyst activity-having catalyst material, adsorbent, etc.

## Claims

1. A clay composite prepared by chemically combining a peroxo ligand-containing water-soluble metal complex (A) and a water-swelling clay mineral.

2. A clay composite as claimed in claim 1, wherein the clay composite is obtained by subjecting the peroxo ligand-containing water-soluble metal complex (A) to a heat treatment in the presence of the water-swelling clay mineral (B).

3. A clay composite as claimed in claim 2, wherein the heat treatment is performed at 50°C or higher but lower than 100°C for 1 to 12 hours.

4. A clay composite as claimed in any one of claims 1 to 3, wherein the peroxo ligand-containing water-soluble metal complex (A) is at least one metal complex selected from the group consisting of peroxo-titanium complex, peroxo-molybdenum complex, peroxo-tungsten complex, peroxo-zirconium complex, peroxo-niobium complex, peroxo-vanadium complex, peroxo-tantalum complex and peroxo-manganese complex.

5. A clay composite as claimed in any one of claims 1 to 3, wherein the peroxo ligand-containing water-soluble metal complex (A) is peroxo-titanium complex.

6. A clay composite as claimed in claim 5, wherein the peroxo-titanium complex is obtained by reacting at least one titanium compound selected from the group consisting of titanium metal, hydrolyzable titanium compound, low condensate of hydrolyzable titanium compound, titanium hydroxide, low condensate of titanium hydroxide and metatitanic acid with hydrogen peroxide water.

7. A clay composite as claimed in any one of claims 1 to 6, wherein the water-swelling clay mineral (B) is at least one clay mineral selected from the group consisting of smectite mineral, vermiculite mineral and synthetic mica.

8. A clay composite as claimed in any one of claims 1 to 7, wherein a peroxo group content in the clay composite is in the range of 1 to 15 mmol per 1 (one) g of the solid content of the clay composite.

9. A clay composite composition prepared by dispersing the clay composite as claimed in any one of claims 1 to 8 into water and/or organic solvent.

10. A clay composite composition as claimed in claim 9, wherein the composition further contain an inorganic fine particle.

11. An inorganic coating film-forming method which comprises coating the clay composite composition as claimed in claim 9 or 10 onto a substrate, followed by heating and drying.

12. An inorganic coating film obtained by the inorganic coating film-forming method as claimed in claim 11.
